(19) Europäisches Patentamt
European Patent Office
Office européen des brevets

(11) **EP 3 636 552 B1**

(12) **EUROPEAN PATENT SPECIFICATION**

(45) Date of publication and mention
of the grant of the patent:
**28.04.2021 Bulletin 2021/17**

(51) Int Cl.:
***B64D 37/32*** *(2006.01)*

(21) Application number: **19203009.6**

(22) Date of filing: **14.10.2019**

(54) **INERTING GAS SYSTEMS FOR AIRCRAFT**

INERTISIERUNGSGASSYSTEME FÜR FLUGZEUGE

SYSTÈMES DE GAZ D'INERTAGE POUR AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2018 US 201816158505**

(43) Date of publication of application:
**15.04.2020 Bulletin 2020/16**

(73) Proprietor: **Hamilton Sundstrand Corporation Charlotte, NC 28217-4578 (US)**

(72) Inventors:
• **CORDATOS, Haralambos**
**Colchesster, CT Connecticut 06415 (US)**

• **RHEAUME, Jonathan**
**West Hartford, CT Connecticut 06119 (US)**
• **EMERSON, Sean C.**
**Broad Brook, CT Connecticut 06016 (US)**

(74) Representative: **Dehns**
**St. Bride's House**
**10 Salisbury Square**
**London EC4Y 8JD (GB)**

(56) References cited:
**US-A- 5 131 225          US-A1- 2004 000 353**
**US-A1- 2010 310 392     US-A1- 2015 360 170**
**US-A1- 2016 376 019**

**Description**

BACKGROUND

The subject matter disclosed herein generally relates to aircraft and, more particularly, to inerting gas systems and systems of aircraft.

In general, aircraft pneumatic systems including, air conditioning systems, cabin pressurization and cooling, and fuel tank inerting systems are powered by engine bleed air. For example, pressurized air from an engine of the aircraft is converted into an inerting gas and provided to a fuel tank ullage through a series of systems that alter the temperatures and pressures of the pressurized air (and remove oxidizing elements thereof). To carry out this processing of the pressurized air, an air separation module (ASM) may be incorporated into the inerting gas system.

In operation, air bled from engines may be supplied to the ASM wherein the air interacts with one or more membranes of the ASM to generate the inerting gas (and separate out oxygen and water). Typically, the air for fuel tank inerting is passed through a porous hollow fiber membrane tube bundle that forms the ASM. Oxygen and water vapor pass preferentially through the membrane, leaving only dry nitrogenenriched air to continue through the ASM into the fuel tank. Typically air separation modules employ a dedicated ram air heat exchanger to control temperature of the air.

Over time and use, the air separation module will suffer from performance decline. For example, ASM performance may decline over time due to membrane aging, fouling (e.g., oil contamination), and other factors, as will be appreciated by those of skill in the art. To account for this, air separation modules and inerting gas systems, may be oversized with respect to the ASM, in order to compensate for the reduced performance (increased size increases operational capability). However, such increased sized ASMs may have impacts on aircrafts (e.g., increased weight). Thus, improved inerting gas systems may be desirable.

Inerting gas systems are disclosed in US 5,131,225, US 2015/360170 and US 2004/000353.

BRIEF DESCRIPTION

According to some embodiments, fuel tank inerting systems for aircraft are provided as defined by claim 1.

In addition to one or more of the features described above, further embodiments of the fuel tank inerting systems may include that the bypass valve is motorized.

In addition to one or more of the features described above, further embodiments of the fuel tank inerting systems may include that the upstream thermal conditioning system comprises a heater configured to increase a temperature of the pressurized air after passing through the ASM cooling heat exchanger.

In addition to one or more of the features described above, further embodiments of the fuel tank inerting systems may include that the heater is at least one of an electric, combustion, and powered heater.

In addition to one or more of the features described above, further embodiments of the fuel tank inerting systems may include that the heater is a heat exchanger.

In addition to one or more of the features described above, further embodiments of the fuel tank inerting systems may include that the upstream thermal conditioning system comprises a boost compressor configured to increase a temperature of the pressurized air after passing through the ASM cooling heat exchanger.

In addition to one or more of the features described above, further embodiments of the fuel tank inerting systems may include a boost bypass valve controllable to enable bypassing of the boost compressor.

In addition to one or more of the features described above, further embodiments of the fuel tank inerting systems may include that the product gas cooler is located upstream relative to the ASM cooling heat exchanger within the ram air duct.

In addition to one or more of the features described above, further embodiments of the fuel tank inerting systems may include a controller configured to control operation of at least one of the upstream thermal conditioning system and the downstream thermal conditioning system.

In addition to one or more of the features described above, further embodiments of the fuel tank inerting systems may include one or more sensors configured to monitor at least one of a temperature of the pressurized air upstream of the air separation module and a temperature of the inerting gas downstream of the air separation module.

In addition to one or more of the features described above, further embodiments of the fuel tank inerting systems may include that the pressurized air source is at least a part of an aircraft engine.

According to some embodiments, methods of supplying inert gas to a fuel tank of an aircraft are provided. The methods includes extracting pressurized air from a pressurized air source, cooling the pressurized air with the ASM cooling heat exchanger located upstream of the air separation module, diverting at least a portion of the pressurized air around the ASM cooling heat exchanger using the bypass valve, increasing a temperature of the pressurized air with an upstream thermal conditioning system located upstream of an air separation module, passing the increased temperature pressurized air into the air separation module to generate an inerting gas, decreasing a temperature of the inerting gas with a downstream thermal conditioning system arranged downstream of the air separation module, and supplying the decreased temperature inerting gas to the fuel tank of the aircraft.

In addition to one or more of the features described above, further embodiments of the methods may include that the upstream thermal conditioning system comprises a heater, the method further comprising increasing a temperature of the pressurized air after passing through the ASM cooling heat exchanger with the heater.

In addition to one or more of the features described above, further embodiments of the methods may include that the upstream thermal conditioning system comprises a boost compressor, the method further comprising increasing a temperature of the pressurized air after passing through the ASM cooling heat exchanger with the boost compressor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:

FIG. 1A is a schematic illustration of an aircraft that can incorporate various embodiments of the present disclosure;

FIG. 1B is a schematic illustration of a bay section of the aircraft of FIG. 1A;

FIG. 2 is a schematic illustration of a prior system configuration of an inerting gas system;

FIG. 3 is a schematic illustration of an inerting gas system in accordance with an embodiment of the present disclosure;

FIG. 4 is a schematic illustration of an inerting gas system in accordance with an embodiment of the present disclosure;

FIG. 5 is a schematic illustration of an inerting gas system in accordance with an embodiment of the present disclosure; and

FIG. 6 is a flow process for generating inerting gas in accordance with an embodiment of the present disclosure.

DETAILED DESCRIPTION

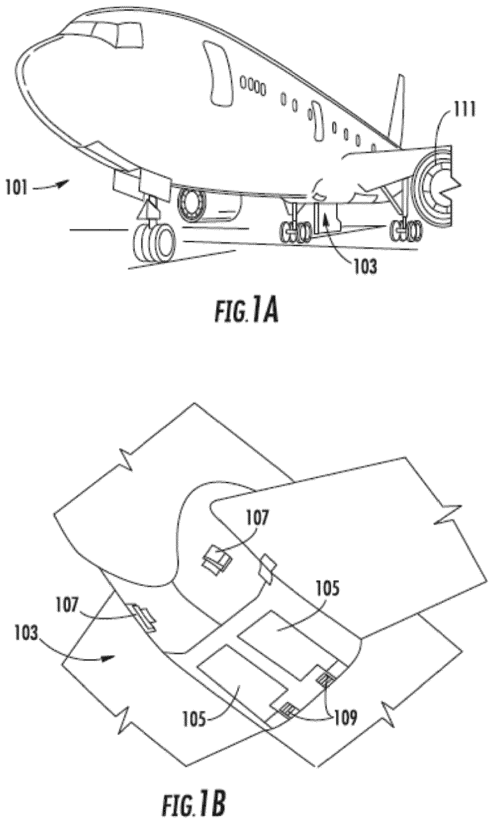

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel tank inerting systems within the bay 103. As shown in FIG. 1B, the bay 103 includes bay doors 105 that enable installation and access to one or more components (e.g., environmental control systems, fuel tank inerting systems, etc.). During operation of environmental control systems and/or fuel tank inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., flight deck, passenger cabin, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel tank inerting systems, as will be appreciated by those of skill in the art.

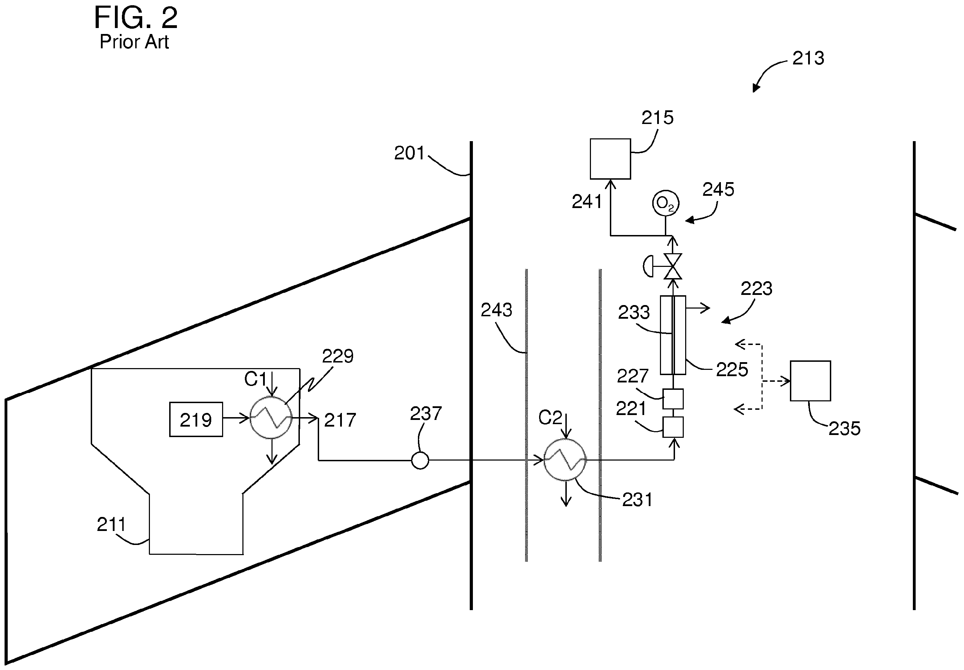

Turning now to FIG. 2, a schematic illustration of an aircraft system 213 for generating and supplying a source of inert gas to another component, such as a fuel tank 215 on an aircraft 201, is illustrated. The system 213 includes a supply of pressurized air 217 provided from a pressurized air source 219 which is employed to generate an inerting gas 241. In the illustrated, non-limiting embodiment, the pressurized air source 219 includes one or more engines 211 of the aircraft 201, or a bleed port thereof, as will be appreciated by those of skill in the art. In such embodiments, the pressurized air 217 may be bled from a compressor section of the engine 211. However, embodiments where the pressurized air source 219 is not an engine are also contemplated herein. For example, in some non-limiting embodiments, the pressurized air source 219 includes a compressor configured to pressurize ambient air as it passes therethrough. The compressor may be driven by a mechanical, pneumatic, hydraulic, or electrical input, as will be appreciated by those of skill in the art.

Within the system 213, the pressurized air 217 may flow through a filter 221 before being provided to an on-board inert gas generating system (OBIGGS) 223, including at least one air separation module (ASM) 225 for removing oxygen from the pressurized air 217 supplied from the pressurized air source 219. The filter 221 may comprise one or more filters, such as a coalescing filter to remove particulate contaminants and moisture, and a carbon filter for removing hydrocarbons from the pressurized air 217 supplied from the pressurized air source 219. Alternatively, or in addition, the pressurized air 217 may pass through an ozone conversion device 227 that is configured to reduce the ozone concentration of the pressurized air 217 before being provided to the OBIGGS 223. Although the filter 221 is illustrated as being upstream of the ozone conversion device 227 such configuration is not to be limiting. For example, in some embodiments, the filter 221 may be located downstream of the ozone conversion device 227. Further, it should be understood that both the filter 221 and ozone conversion device 227 may be located at any relative position within the system 213, upstream from the OBIGGS 223.

The temperature of the pressurized air 217 should be below a maximum allowable temperature to maintain the safety of the downstream components, as well as the safety of the fuel tank 215. Because the pressurized air 217 from the pressurized air source 219 is generally extremely hot, the pressurized air 217 is typically cooled before being processed (e.g., within the filter 221, ozone conversion device 227, and/or OBIGGS 223). Accordingly, one or more cooling devices, such as heat exchangers, may be used to control the temperature of the pressurized air within the system 213 before being provided to the OBIGGS 223. For example, the system 213 includes a precooler 229 that arranges the pressurized air 217 in a heat transfer relationship with a secondary cooling flow C1, such as fan bypass air from the pressurized air source 219. Within the precooler 229, the pressurized air 217 may be reduced to a temperature less than or equal to about 200° C. The system 213 may additionally include an ASM cooling heat exchanger 231 configured to further cool the pressurized air 217 prior to supplying the air to the OBIGGS 223. In some embodiments, a secondary cooling flow C2, such as ambient air supplied through a ram air duct 243, is arranged in a heat transfer relationship with the pressurized air 217 within the ASM cooling heat exchanger 231 and is configured to reduce the temperature of the pressurized air 217 to a desired temperature, for example, less than or equal to about 80° C at sea level on a hot day.

In some embodiments, the ambient airflow used as the secondary cooling flow C2 can be directed within the aircraft body by a low-drag air inlet (e.g., NACA duct or NACA scoop), etc. In some embodiments, the secondary cooling flow C2 may be conditioned air from an environmental control system of the aircraft. In some embodiments, the secondary cooling flow C2 can be cooled by an air cycle machine such as an environmental control system of the aircraft. In some embodiments, the secondary cooling flow C2 utilizes a vapor cycle machine for cooling. In some embodiments, the secondary cooling flow C2 can be a fuselage outflow to utilize airflow from within a passenger cabin, cargo hold, or flight deck of the aircraft. In some embodiments, the secondary cooling flow C2 can be fan bleed air from an engine of the aircraft. In some embodiments, the secondary cooling flow C2 can be a combination or hybrid of the airflow sources described herein. In some embodiments, airflow sources can be selectively provided and combined to provide a desired secondary cooling flow C2. Typical air separation modules, such as ASM 225, operate using pressure differentials to achieve a desired air separation. Such systems require a high pressure pneumatic source to drive the separation process across a membrane 233 of the ASM 225. In view of the above, a specific configuration is not contemplated as limiting, but rather various configurations and/or arrangements may be implemented without departing from the scope of the present disclosure.

The system 213, as shown, includes a controller 235 that is operably coupled to one or more of the components of the system 213. For example, the controller 235 may be configured to operate a flow control device 237 to control the flow rate of the pressurized air 217 through the system 213. In addition, the controller 235 may be associated with an external source to initiate and terminate a secondary fluid within the ASM 225, as will be appreciated by those of skill in the art. Further, the controller 235 may be operably connected to one or more sensors 245, such as oxygen sensors for measuring the amount of oxygen in the pressurized air 217 and/or the inerting gas 241 that is provided to the fuel tank 215, or a sensor for monitoring one or more conditions associated with the fuel tank 215, such as a flow rate, quantity of fuel, and fuel demand. The controller 235 may be configured to receive an output from the sensors to adjust one or more operating conditions of the system 213.

In some embodiments, a portion of the pressurized air 217 may be extracted and/or supplied to various other components or systems of the aircraft 201. For example, a portion of the pressurized air 217 may be supplied to an anti-ice system within or on the wings of the aircraft 201. Further, a portion (e.g., a majority in some systems) may be supplied to an environmental control system of the aircraft 201, as will be appreciated by those of skill in the art. The remainder may then flow through the system 213, as described above, to generate the inerting gas 241.

As is known in the art, over time, the air separation module will suffer from performance decline. For example, ASM performance may decline over time due to membrane aging, fouling (e.g., oil contamination), and other factors, as will be appreciated by those of skill in the art. To account for this, prior systems, such as that shown and described with respect to FIG. 2, may oversize the ASM in order to compensate for the reduced performance. However, improved ASM useful life may be greatly advantageous. Accordingly, embodiments provided herein are directed to improved systems for ASM and inerting gas generation. In some embodiments, greater amounts of inerting gas may be produced through increased efficiencies and further, in some embodiments, elimination of oversized systems may be achieved. Stated another way, some embodiments provided herein can enable smaller ASM systems, without sacrificing efficiency and/or useful life (and may even increase useful life with a smaller ASM).

To achieve the above, the performance decline of ASMs can be mitigated by increasing pressure and/or temperature. As such, embodiments described herein are directed systems and methods to vary temperature and pressure in order to increase ASM output to counter performance decline. The equation that describes the gas flux through a membrane of an ASM is:

$$J = K * A * dP \qquad\qquad (1)$$

In Equation (1), J is the flux or rate of inerting gas generation, K is permeance (permeation into and through the membrane which is a function of temperature), *A* is the area of the membrane, and *dP* is the differential pressure across the selective layer of the ASM. To compensate for performance decline, one can simply add membrane surface area, which is already in practice and is implemented in oversized ASMs. In contrast, embodiments described herein are directed to increasing permeance K (e.g., by increasing temperature) and to increasing pressure differential *dP* (e.g., higher pressure at inlet, lower pressure at outlet).

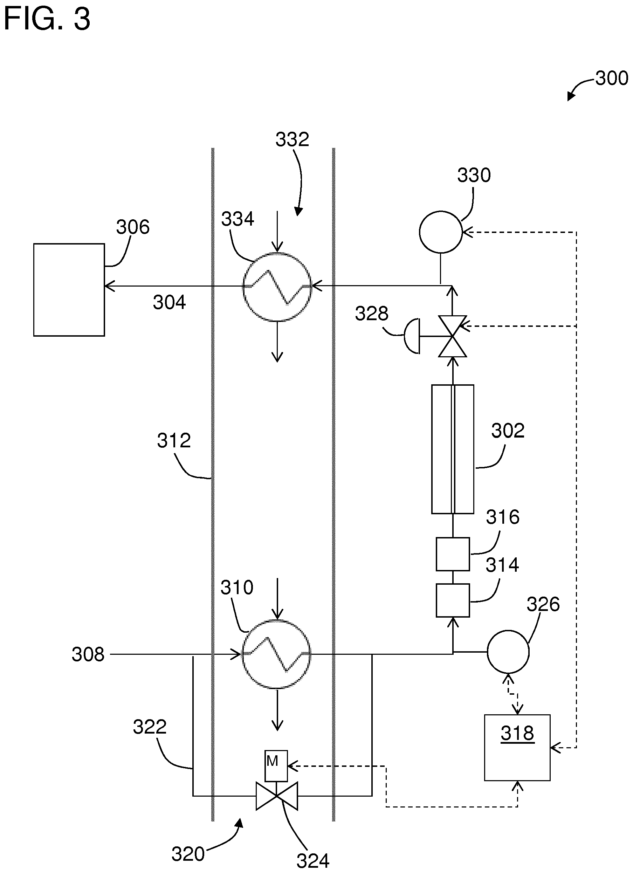

Turning now to FIG. 3, a schematic illustration of an inerting gas system 300 in accordance with an embodiment of the present disclosure is shown. The inerting gas system 300 may be similar to that shown and described above, but provides for improved useful life of an ASM through increased temperatures at the ASM. The inerting gas system 300 includes an air separation module (ASM) 302 arranged along a flow path and configured to generate inerting gas 304 and supply such inerting gas to a fuel tank 306, similar to that described above. The ASM 302 may be a membranebased ASM, similar to that described above.

Pressurized air 308 (e.g., bleed air) is passed through upstream components, such as a precooler, and subsequently passed through an ASM cooling heat exchanger 310 that is configured to further cool the pressurized air 308 prior to supplying the air to the ASM 302. The ASM cooling heat exchanger 310 may be arranged within a ram air duct 312, similar to the arrangement described above. Further, the inerting gas system 300, as shown, includes an ozone conversion device 314 and a filter 316, located upstream of the ASM 302. The inerting gas system 300 further includes a controller 318 that is operably coupled to one or more of the components of the inerting gas system 300.

In the inerting gas system 300 a mechanism for increasing the temperature at the inlet to the ASM 302, or upstream thereof, is provided. In this non-limiting embodiment, an upstream thermal conditioning system 320 is provided. In this embodiment, the upstream thermal conditioning system 320 is configured to enable a portion (or all) of the relatively warm/hot air to bypass the ASM cooling heat exchanger 310, thus preventing cooling of the pressurized air 308 within the ASM cooling heat exchanger 310. Further, if a portion of the pressurized air 308 is caused to bypass the ASM cooling heat exchanger 310, the bypassing portion may be mixed with pressurized air that has been passed through the ASM cooling heat exchanger 310, thus enabling a mixture of air temperatures, to achieve a desired air temperature upstream of the ASM 302.

Accordingly, in this embodiment, the upstream thermal conditioning system 320 includes a bypass line 322 and a bypass valve 324. The bypass valve 324, in some embodiments, may be operably connected to and/or controlled by the controller 318. The bypass valve 324 may be a motorized bypass valve. An optional upstream temperature sensor 326, as shown, is arranged downstream of the upstream thermal conditioning system 320 and upstream of the ASM 302, so that an ASM inlet temperature may be monitored. The controller 318 may also be operably connected to a pressure regulator 328 and one or more outlet sensors 330 (e.g., temperature sensor, oxygen sensor, etc.) which are arranged downstream of the ASM 302. The controller 318 thus may monitor and/or control inlet and outlet temperatures and/or pressures of the air as it passes through the ASM 302 to generate the inerting gas 304.

The upstream thermal conditioning system 320 is arranged to raise a temperature of the pressurized air 308 prior to entry into the ASM 302. The increased temperature can enable improved efficiency of the ASM 302 for generation of the inerting gas 304.

After the air passes through the ASM 302, the temperature will remain high. Accordingly, prior to the supplying the inerting gas 304 to the fuel tank 306, the temperature must be lowered. To achieve this, a downstream thermal conditioning system 332 is provided. The downstream thermal conditioning system 332 includes a product gas cooler 334. The product gas cooler 334 may be a heat exchanger located within the ram air duct 312. As shown, in this embodiment, the location of the product gas cooler 334 is upstream of the ASM cooling heat exchanger 310 within the ram air duct 312. Further, as shown, the product gas cooler 334 is illustratively shown as separate from the ASM cooling heat exchanger 310. However, in some embodiments, the product gas cooler 334 and the ASM cooling heat exchanger 310 may be components of a multi-pass heat exchanger, and thus the ASM cooling heat exchanger 310 and the product gas cooler 334 may be located at substantially the same location within the ram air duct 312. In some such embodiments, in a multi-pass heat exchanger, the pass of the product gas cooler 334 is located upstream of the ASM cooling heat exchanger 310 relative to a flow of ram air within the ram air duct 312.

The downstream thermal conditioning system 332 is arranged to reduce a temperature of the inerting gas 304 prior to being supplied into the fuel tank 306. In one non-limiting embodiment, the upstream thermal conditioning system 320 is configured (or controlled) to generate upstream air temperatures of 250 °F (121°C) or greater and the downstream thermal conditioning system 332 is configured (or controlled) to cool the inerting gas 304 to 200 °F (93°C) or less. Further, in some embodiments, the upstream temperatures may be between 250 °F (121°C) and 350 °F (177°C), and the downstream temperatures may be between 100 °F (38°C) and 200 °F (93°C). It will be noted that the desired, cooled outlet air, downstream of the ASM 302 and prior to the fuel tank 306 should be below the auto-ignition temperature of the fuel within the fuel tank 306. The inlet temperature may be selected based on the specific configuration of the ASM 302 (e.g., based on materials of the ASM 302).

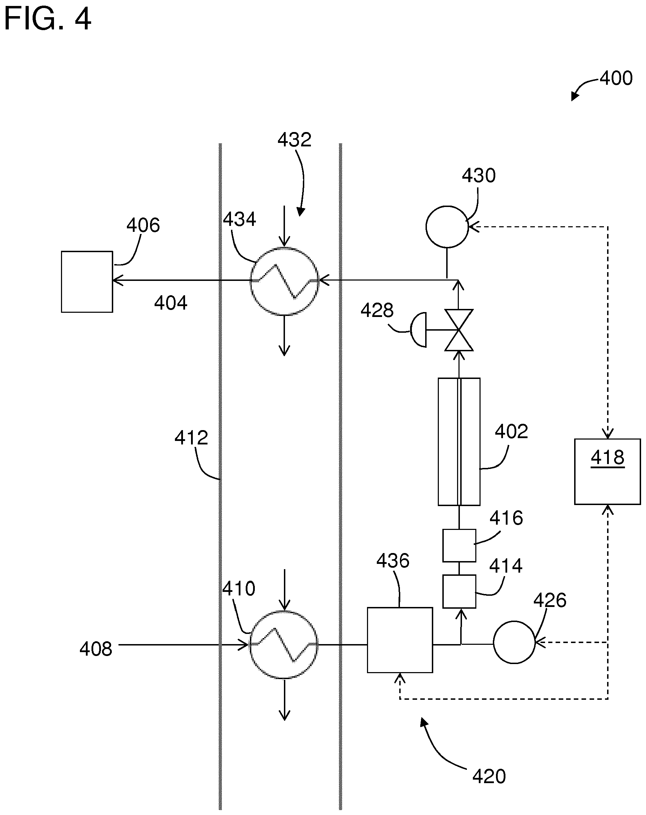

Turning now to FIG. 4, a schematic illustration of an inerting gas system 400 in accordance with an embodiment of the present disclosure is shown. The inerting gas system 400 may be similar to that shown and described above with respect to FIG. 3. The inerting gas system 400 includes an air separation module (ASM) 402 arranged along a flow path and configured to generate inerting gas 404 and supply such inerting gas to a fuel tank 406. Pressurized air 408 (e.g., bleed air) is passed through upstream components, such as a precooler, and subsequently passed through an ASM cooling heat exchanger 410 located in a ram air duct 412. The inerting gas system 400 includes an ozone conversion device 414, a filter 416, and a controller 418 that is operably coupled to one or more of the components of the inerting gas system 400.

The inerting gas system 400 further includes an upstream thermal conditioning system 420 to control an inlet air temperature upstream of the ASM 402 (e.g., increase an upstream air temperature relative to the ASM 402). In this embodiment, the upstream thermal conditioning system 420 includes a heater 436. The heater 436 may be operably connected to and/or controlled by the controller 418. The heater 436 may be an electric, combustion, or powered heater or may be a passive heater (e.g., heat exchanger). In one non-limiting example of a passive heater, air extracted upstream of the ASM cooling heat exchanger 410 may be employed to reheat the cooled air after passing through the ASM cooling heat exchanger 410. In another non-limiting example of a passive heater, the heat source may be heated hydraulic fluid, heated oil, or heated coolant. In some such embodiments, a control valve may be operated or controlled by the controller 418 (e.g., similar to the bypass valve 324 described above). In another embodiment, the heater 436 may burn fuel or supply heat by a chemical reaction or heating mechanisms, as will be appreciated by those of skill in the art. An optional upstream temperature sensor 426, as shown, is arranged downstream of the heater 436 and upstream of the ASM 402, so that an ASM inlet temperature may be monitored. The controller 418 may also be operably connected to a pressure regulator 428 and one or more outlet sensors 430 (e.g., temperature sensor, oxygen sensor, etc.) which are arranged downstream of the ASM 402. The controller 418 thus may monitor and/or control inlet and outlet temperatures and/or pressures of the air as it passes through the ASM 402 to generate the inerting gas 404.

The upstream thermal conditioning system 420 is arranged to raise a temperature of the pressurized air 408 prior to entry into the ASM 402. The increased temperature can enable improved efficiency of the ASM 402 for generation of the inerting gas 404. After the air passes through the ASM 402, the temperature will remain high. Accordingly, prior to the supplying the inerting gas 404 to the fuel tank 406, the temperature must be lowered, as described above. That is, a downstream thermal conditioning system 432 is provided that can include a product gas cooler 434 located within the ram air duct 412.

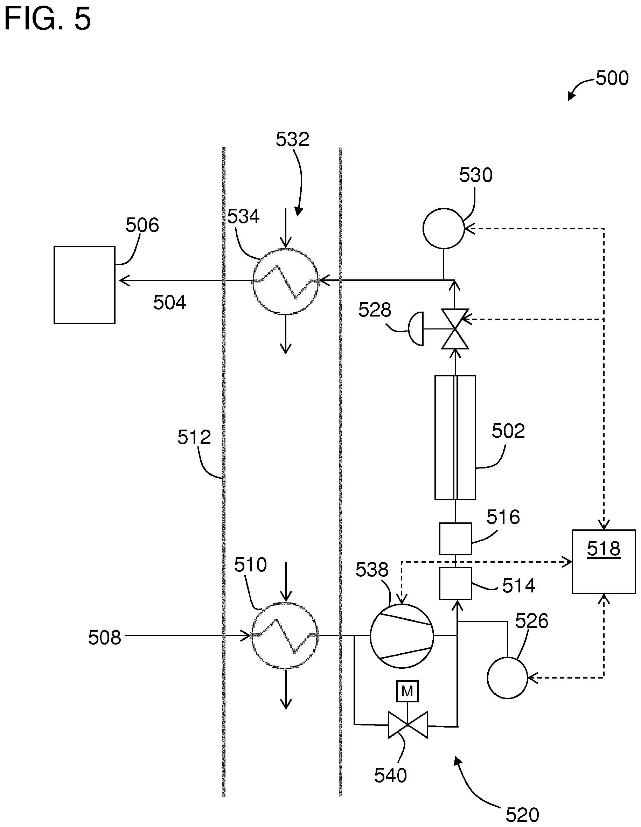

Turning now to FIG. 5, a schematic illustration of an inerting gas system 500 in accordance with an embodiment of the present disclosure is shown. The inerting gas system 500 may be similar to that shown and described above with respect to FIGS. 3-4. The inerting gas system 500 includes an air separation module (ASM) 502 arranged along a flow path and configured to generate inerting gas 504 and supply such inerting gas to a fuel tank 506. Pressurized air 508 (e.g., bleed air) is passed through upstream components, such as a precooler, and subsequently passed through an ASM cooling heat exchanger 510 located in a ram air duct 512. The inerting gas system 500 includes an ozone conversion device 514, a filter 516, and a controller 518 that is operably coupled to one or more of the components of the inerting gas system 500.

The inerting gas system 500 further includes an upstream thermal conditioning system 520 to control an inlet air temperature upstream of the ASM 502 (e.g., increase an upstream air temperature relative to the ASM 502). In this embodiment, the upstream thermal conditioning system 520 includes a boost compressor 538. The boost compressor 538 may be operably connected to and/or controlled by the controller 518. The boost compressor 538 may be an electric or powered compressor, as will be appreciated by those of skill in the art. In some embodiments, the boost compressor 538 may be an oil-free boost compressor. The boost compressor 538 may increase a pressure of the pressurized air 508 after it passes through the ASM cooling heat exchanger 510, thereby increasing a temperature thereof. The boost compressor 538 may be employed, in some embodiments, during a descent of an aircraft and/or during engine idle conditions. A boost bypass valve 540 may be arranged to enable bypassing the boost compressor 538, e.g., the pressure and/or temperature of the pressurized air 508 is already sufficient for the ASM 502 efficiency. An optional upstream temperature sensor 526, as shown, is arranged downstream of the boost compressor 538 and upstream of the ASM 502, so that an ASM inlet temperature may be monitored. The controller 518 may also be operably connected to a pressure regulator 528 and one or more outlet sensors 530 (e.g., temperature sensor, oxygen sensor, etc.) which are arranged downstream of the ASM 502. The controller 518 thus may monitor and/or control inlet and outlet temperatures and/or pressures of the air as it passes through the ASM 502 to generate the inerting gas 504.

The upstream thermal conditioning system 520 is arranged to raise a temperature of the pressurized air 508 prior to entry into the ASM 502. The increased temperature can enable improved efficiency of the ASM 502 for generation of the inerting gas 504. After the air passes through the ASM 502, the temperature will remain high. Accordingly, prior to the supplying the inerting gas 504 to the fuel tank 506, the temperature must be lowered, as described above. That is, a downstream thermal conditioning system 532 is provided that can include a product gas cooler 534 located within the ram air duct 512.

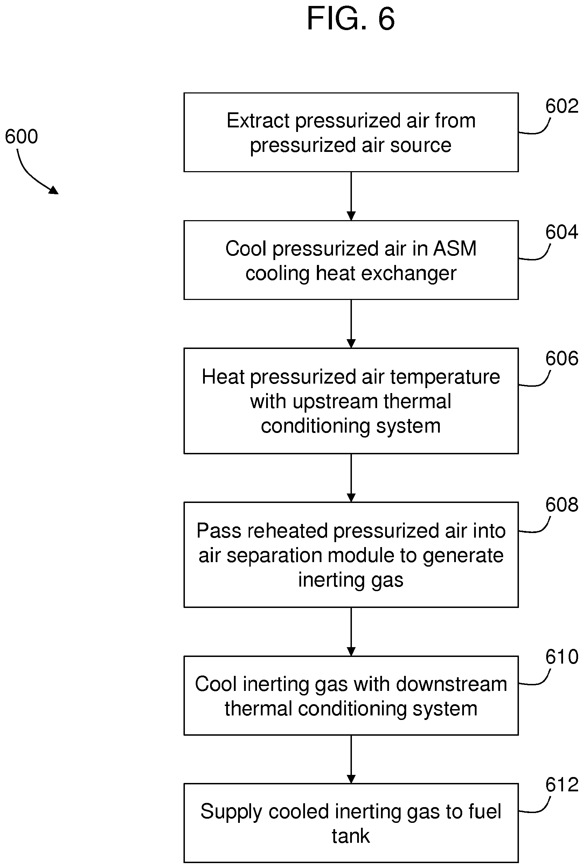

Turning now to FIG. 6, a flow process 600 for generating inerting gas for a fuel tank of an aircraft in accordance with an embodiment of the present disclosure is shown. The flow process 600 may be performed using inerting gas systems as shown and described above. The inerting gas systems may include one or more features of the upstream thermal conditioning systems described in the various illustrative embodiments above. For example, the upstream thermal conditioning system used for the flow process 600 may include one or more of a bypass valve, heater, and/or boost compressor, and/or other types of heaters or thermal control units/mechanisms as will be appreciated by those of skill in the art. That is, the above described illustrative embodiments are merely for example, and are not to be limiting in scope or bounds.

At block 602, pressurized air is extracted from a pressurized air source. The pressurized air source may be an engine or portion thereof, such as a bleed port. The bleed air may be relatively hot. It will be appreciated by those of skill in the art that some or most of the bleed air may be supplied to one or more aircraft systems, such as anti-ice systems, environmental control systems, and fuel tank inerting systems (e.g., OBIGGS). The pressurized air may be pre-cooled, as will be appreciated by those of skill in the art.

At block 604, at least a portion of the pressurized air is cooled in an ASM cooling heat exchanger, reducing the temperature thereof. The ASM cooling heat exchanger may be positioned within a ram air duct, as shown and described above.

At block 606, the cooled air may be heated with an upstream thermal conditioning system. The upstream thermal conditioning system is located upstream of an air separation module (ASM) that is configured to convert the pressurized air into an inerting gas. The upstream thermal conditioning system, as noted above, can include one or more of a bypass valve, a heater, a boost compressor, or other heating mechanism, as will be appreciated by those of skill in the art. The upstream thermal conditioning system may be configured and/or controlled to generate a pressurized air having a specific temperature or temperature range upstream of an air separation module.

At block 608, the reheated pressurized air is passed into an air separation module (ASM) to generate the inerting gas. The air separation module may be a membrane-type ASM, with the efficiency thereof governed by Equation (1), described above.

At block 610, the inerting gas that is generated may be passed through a downstream thermal conditioning system. The downstream thermal conditioning system may include product gas cooler that is a heat exchanger located within the ram air duct. The product gas cooler may be arranged upstream within the ram air duct relative to the ASM cooling heat exchanger.

At block 612, the cooled inerting gas may then be provided into an ullage of a fuel tank, as will be appreciated by those of skill in the art.

Advantageously, embodiments of the present disclosure are directed to inerting gas systems with improved efficiencies and performance as compared to prior systems. Advantageously, embodiments of the present disclosure can enable extended life air separation modules, by providing more optimal temperatures for operation. Further, embodiments described herein can avoid premature failure of an air separation module. Moreover, advantageously, air separation modules of inerting gas systems of the present disclosure may not need to be oversized to account for performance decline, and thus smaller systems/packages may be implemented with embodiments of the present disclosure. Furthermore, advantageously, embodiments provided here can generate more inert gas with similar size systems as prior configurations, e.g., through efficiencies and increased life of the system. Moreover, if a system in accordance with the present disclosure is implemented in the same volume as prior systems, the efficiencies may be further increased and additionally the amount of inerting gas generated may be increased.

The use of the terms "a," "an," "the," and similar references in the context of description (especially in the context of the following claims) are to be construed to cover both the singular and the plural, unless otherwise indicated herein or specifically contradicted by context. The modifier "about" and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the invention has been described in detail in connection with only a limited number of embodiments, it should be readily understood that the invention is not limited to such disclosed embodiments. Rather, the invention can be modified to incorporate any number of variations, alterations, substitutions, combinations, subcombinations, not heretofore described, but which are within the scope of the invention as defined by the claims.

Accordingly, the present disclosure is not to be seen as limited by the foregoing description, but is only limited by the scope of the appended claims.

**Claims**

1.  A fuel tank inerting system (300, 400, 500) for an aircraft, the system comprising : a ram air duct (312, 412, 512);

    a fuel tank (306,406,506);
    a pressurized air source (308, 408, 508);
    an air separation module ASM (302, 402, 502) arranged between the pressurized air source and the fuel tank, the air separation module configured to generate an inerting gas from pressurized air supplied from the pressurized air source and supply the inerting gas to the fuel tank;
    an upstream thermal conditioning system (320, 420, 520) arranged upstream of the air separation module, the upstream thermal conditioning system configured to increase a temperature of the pressurized air prior to entry into the air separation module;
    a downstream thermal conditioning system (332, 432, 532) (332) arranged downstream of the air separation module, the downstream thermal conditioning system configured to decrease a temperature of the inerting gas prior to entry into the fuel tank, **characterized in that** the downstream thermal conditioning system comprises a product gas cooler (334, 434, 534) located in the ram air duct; and **in that** the upstream thermal conditioning system comprises an ASM cooling heat exchanger (310, 410, 510) arranged within the ram air duct (312, 412, 512) of the aircraft, wherein the pressurized air passes through the ASM cooling heat exchanger upstream of the air separation module, the upstream thermal conditioning system further comprising
    a bypass line (322) and a bypass valve (324), wherein the bypass valve is operable to divert at least a portion of the pressurized air around the ASM cooling heat exchanger (310, 410, 510).

2.  The system of claim 1, wherein the bypass valve is motorized.

3.  The system of claim 1 or 2 further comprising a heater (436) configured to increase a temperature of the pressurized air after passing through the ASM cooling heat exchanger.

4.  The system of claim 3, wherein the heater is at least one of an electric, combustion, and powered heater or a heat exchanger.

5.  The system of any preceding claim, wherein the upstream thermal conditioning system comprises a boost compressor (538) configured to increase a temperature of the pressurized air after passing through the ASM cooling heat exchanger.

6.  The system of claim 5, further comprising a boost bypass valve (540) controllable to enable bypassing of the boost compressor.

7.  The system of any preceding claim, wherein the product gas cooler is located upstream relative to the ASM cooling heat exchanger within the ram air duct.

8.  The system of any preceding claim, further comprising a controller (318,418,518) configured to control operation of at least one of the upstream thermal conditioning system and the downstream thermal conditioning system.

9.  The system of any preceding claim, further comprising one or more sensors (326, 330, 426, 430, 526, 530) configured to monitor at least one of a temperature of the pressurized air upstream of the air separation module and a temperature of the inerting gas downstream of the air separation module.

10. The system of any preceding claim, wherein the pressurized air source is at least a part of an aircraft engine.

11. A method of supplying inert gas to a fuel tank of an aircraft, the aircraft having a fuel tank inerting system in accordance with any preceding claim, the method comprising:

extracting pressurized air from the pressurized air source (308, 408, 508);
cooling the pressurized air with the ASM cooling heat exchanger (310, 410, 510) located upstream of the air separation module;
diverting at least a portion of the pressurized air around the ASM cooling heat exchanger (310, 410, 510) using the bypass valve (324);
increasing a temperature of the pressurized air with the upstream thermal conditioning system (320, 420, 520) located upstream of the air separation module ASM (302, 402, 502);
passing the increased temperature pressurized air into the air separation module to generate the inerting gas;
decreasing a temperature of the inerting gas with the downstream thermal conditioning system (332, 432, 532) (332) arranged downstream of the air separation module; and
supplying the decreased temperature inerting gas to the fuel tank of the aircraft.

12. The method of claim 11,
wherein when the upstream thermal conditioning system (420) comprises the heater (436), the method further comprising increasing a temperature of the pressurized air after passing through the ASM cooling heat exchanger with the heater.

13. The method of claim 11,
wherein when the upstream thermal conditioning system (520) comprises the boost compressor (538), the method further comprising increasing a temperature of the pressurized air after passing through the ASM cooling heat exchanger with the boost compressor.

**Patentansprüche**

1. Kraftstofftank-Inertisierungssystem (300, 400, 500) für ein Flugzeug, wobei das System Folgendes umfasst: einen Stauluftkanal (312, 412, 512);
einen Kraftstofftank (306, 406, 506);
eine Druckluftquelle (308, 408, 508);
ein Lufttrennungsmodul (air separation module - ASM) (302, 402, 502), das zwischen der Druckluftquelle und dem Kraftstofftank angeordnet ist, wobei das Lufttrennungsmodul dazu konfiguriert ist, anhand von Druckluft, die von der Druckluftquelle zugeführt wird, ein Inertisierungsgas zu generieren und das Inertisierungsgas dem Kraftstofftank zuzuführen;
ein stromaufwärtiges System zur thermischen Konditionierung (320, 420, 520), das stromaufwärts des Lufttrennungsmoduls angeordnet ist, wobei das stromaufwärtige System zur thermischen Konditionierung dazu konfiguriert ist, eine Temperatur der Druckluft zu erhöhen, bevor diese in das Lufttrennungsmodul einströmt;
ein stromabwärtiges System zur thermischen Konditionierung (332, 432, 532), das stromabwärts des Lufttrennungsmoduls angeordnet ist, wobei das stromabwärtige System zur thermischen Konditionierung dazu konfiguriert, eine Temperatur des Inertisierungsgases zu senken, bevor dieses in den Kraftstofftank einströmt, **dadurch gekennzeichnet, dass** das stromabwärtige System zur thermischen Konditionierung eine Produktgaskühlvorrichtung (334, 434, 534) umfasst, die sich in dem Stauluftkanal befindet, und das stromaufwärtige System zur thermischen Konditionierung einen Wärmetauscher (310, 410, 510) zum Kühlen des ASM umfasst, der in dem Stauluftkanal (312, 412, 512) des Flugzeugs angeordnet ist, wobei die Druckluft den Wärmetauscher zum Kühlen des ASM stromaufwärts des Lufttrennungsmoduls passiert, wobei das stromaufwärtige System zur thermischen Konditionierung ferner Folgendes umfasst:
eine Umgehungsleitung (322) und ein Umgehungsventil (324), wobei das Umgehungsventil betreibbar ist, um zumindest einen Teil der Druckluft um den Wärmetauscher (310, 410, 510) zum Kühlen des ASM herum zu lenken.

2. System nach Anspruch 1, wobei das Umgehungsventil motorisiert ist.

3. System nach Anspruch 1 oder 2, ferner umfassend eine Heizvorrichtung (436), die dazu konfiguriert ist, eine Temperatur der Druckluft zu erhöhen, nachdem diese den Wärmetauscher zum Kühlen des ASM passiert hat.

4. System nach Anspruch 3, wobei es sich bei der Heizvorrichtung um mindestens eines von einer elektrischen, einer Verbrennungs- und einer leistungsbetriebenen Heizvorrichtung oder um einen Wärmetauscher handelt.

5. System nach einem der vorhergehenden Ansprüche, wobei das stromaufwärtige System zur thermischen Konditionierung einen Boost-Verdichter (538) umfasst, der dazu konfiguriert ist, eine Temperatur der Druckluft zu erhöhen, nachdem diese den Wärmetauscher zum Kühlen des ASM passiert hat.

6. System nach Anspruch 5, ferner umfassend ein Boost-Umgehungsventil (540), das steuerbar ist, um ein Umgehen des Boost-Verdichters zu ermöglichen.

7. System nach einem der vorhergehenden Ansprüche, wobei sich die Produktgaskühlvorrichtung stromaufwärts relativ zu dem Wärmetauscher zum Kühlen des ASM in dem Stauluftkanal befindet.

8. System nach einem der vorhergehenden Ansprüche, ferner umfassend eine Steuerung (318, 418, 518), die dazu konfiguriert ist, den Betrieb mindestens eines des stromaufwärtigen Systems zur thermischen Konditionierung und des stromabwärtigen Systems zur thermischen Konditionierung zu steuern.

9. System nach einem der vorhergehenden Ansprüche, ferner umfassend einen oder mehrere Sensoren (326, 330, 426, 430, 526, 530), die dazu konfiguriert sind, mindestens eines von einer Temperatur der Druckluft stromaufwärts des Lufttrennungsmoduls und einer Temperatur des Inertisierungsgases stromabwärts des Lufttrennungsmoduls zu überwachen.

10. System nach einem der vorhergehenden Ansprüche, wobei die Druckluftquelle zumindest ein Teil eines Flugzeugtriebwerks ist.

11. Verfahren zum Zuführen eines Inertisierungsgases zu einem Kraftstofftank eines Flugzeugs, wobei das Flugzeug ein Kraftstofftank-Inertisierungssystem gemäß einem der vorhergehenden Ansprüche aufweist, wobei das Verfahren Folgendes umfasst:

Extrahieren von Druckluft aus der Druckluftquelle (308, 408, 508);
Kühlen der Druckluft mithilfe des Wärmetauschers (310, 410, 510) zum Kühlen des ASM, der sich stromaufwärts des Lufttrennungsmoduls befindet;
Umlenken zumindest eines Teils der Druckluft um den Wärmetauscher (310, 410, 510) zum Kühlen des ASM herum unter Verwendung des Umgehungsventils (324);
Erhöhen einer Temperatur der Druckluft mithilfe des stromaufwärtigen Systems zur thermischen Konditionierung (320, 420, 520), das sich stromaufwärts des Lufttrennungsmoduls (ASM) (302, 402, 502) befindet;
Leiten der Druckluft mit der erhöhten Temperatur in das Lufttrennungsmodul zum Generieren des Inertisierungsgases;
Senken einer Temperatur des Inertisierungsgases mithilfe des stromabwärtigen Systems zur thermischen Konditionierung (332, 432, 532), das stromabwärts des Lufttrennungsmoduls angeordnet ist; und
Zuführen des Inertisierungsgases mit der gesenkten Temperatur zu dem Kraftstofftank des Flugzeugs.

12. Verfahren nach Anspruch 11, wobei das Verfahren, wenn das stromaufwärtige System zur thermischen Konditionierung (420) die Heizvorrichtung (436) umfasst, ferner ein Erhöhen einer Temperatur der Druckluft, nachdem diese den Wärmetauscher zum Kühlen des ASM passiert hat, mithilfe der Heizvorrichtung umfasst.

13. Verfahren nach Anspruch 11, wobei das Verfahren, wenn das stromaufwärtige System zur thermischen Konditionierung (520) den Boost-Verdichter (538) umfasst, ferner ein Erhöhen einer Temperatur der Druckluft, nachdem diese den Wärmetauscher zum Kühlen des ASM passiert hat, mithilfe des Boost-Verdichters umfasst.

**Revendications**

1. Système d'inertage de réservoir de carburant (300, 400, 500) pour un aéronef, le système comprenant : un conduit d'air dynamique (312, 412, 512) ;
un réservoir de carburant (306, 406, 506) ;
une source d'air sous pression (308, 408, 508) ;

un module de séparation d'air ASM (302, 402, 502) agencé entre la source d'air sous pression et le réservoir de carburant, le module de séparation d'air étant conçu pour générer un gaz d'inertage à partir d'air sous pression approvisionné à partir de la source d'air sous pression et pour approvisionner le réservoir de carburant en gaz d'inertage ;

un système de régulation thermique amont (320, 420, 520) agencé en amont du module de séparation d'air, le système de régulation thermique amont étant conçu pour augmenter une température de l'air sous pression avant son entrée dans le module de séparation d'air ;

un système de régulation thermique aval (332, 432, 532) agencé en aval du module de séparation d'air, le système de régulation thermique aval étant conçu pour diminuer une température du gaz d'inertage avant son entrée dans le réservoir de carburant, **caractérisé en ce que** le système de régulation thermique aval comprend un refroidisseur de gaz produit (334, 434, 534) situé dans le conduit d'air dynamique ; et **en ce que** le système de régulation thermique amont comprend un échangeur de chaleur à refroidissement ASM (310, 410, 510) agencé à l'intérieur du conduit d'air dynamique (312, 412, 512) de l'aéronef, dans lequel l'air sous pression passe à travers l'échangeur de chaleur à refroidissement ASM en amont du module de séparation d'air, le système de régulation thermique amont comprenant en outre une conduite de dérivation (322) et une soupape de dérivation (324), dans lequel la soupape de dérivation peut être utilisée pour détourner au moins une partie de l'air sous pression autour de l'échangeur de chaleur à refroidissement ASM (310, 410, 510).

2. Système selon la revendication 1, dans lequel la soupape de dérivation est motorisée.

3. Système selon la revendication 1 ou 2, comprenant en outre un élément chauffant (436) conçu pour augmenter une température de l'air sous pression après qu'il a traversé l'échangeur de chaleur à refroidissement ASM.

4. Système selon la revendication 3, dans lequel l'élément chauffant est au moins un parmi une combustion électrique, et un élément chauffant ou un échangeur de chaleur électrique.

5. Système selon une quelconque revendication précédente, dans lequel le système de régulation thermique amont comprend un compresseur de suralimentation (538) conçu pour augmenter une température de l'air sous pression après qu'il est passé à travers l'échangeur de chaleur à refroidissement ASM.

6. Système selon la revendication 5, comprenant en outre une soupape de dérivation de suralimentation (540) pouvant être commandée pour permettre le contournement du compresseur de suralimentation.

7. Système selon une quelconque revendication précédente, dans lequel le refroidisseur de gaz produit est situé en amont par rapport à l'échangeur de chaleur à refroidissement ASM à l'intérieur du conduit d'air dynamique.

8. Système selon une quelconque revendication précédente, comprenant en outre un dispositif de commande (318, 418, 518) conçu pour commander le fonctionnement d'au moins un parmi le système de régulation thermique amont et le système de régulation thermique aval.

9. Système selon une quelconque revendication précédente, comprenant en outre un ou plusieurs capteurs (326, 330, 426, 430, 526, 530) conçus pour surveiller au moins une parmi une température de l'air sous pression en amont du module de séparation d'air et une température du gaz d'inertage en aval du module de séparation d'air.

10. Système selon une quelconque revendication précédente, dans lequel la source d'air pressurisé est au moins une partie d'un moteur d'aéronef.

11. Procédé d'approvisionnement d'un réservoir de carburant d'un aéronef en gaz inerte, l'aéronef ayant un système d'inertage de réservoir de carburant selon une quelconque revendication précédente, le procédé comprenant :

l'extraction d'air sous pression de la source d'air sous pression (308, 408, 508) ;
le refroidissement de l'air sous pression avec l'échangeur de chaleur à refroidissement ASM (310, 410, 510) situé en amont du module de séparation d'air ;
la déviation d'au moins une partie de l'air sous pression autour de l'échangeur de chaleur à refroidissement ASM (310, 410, 510) à l'aide de la soupape de dérivation (324) ;
l'augmentation d'une température de l'air sous pression avec le système de régulation thermique amont (320, 420, 520) situé en amont du module de séparation d'air ASM (302, 402, 502)
le passage de l'air sous pression à température augmentée dans le module de séparation d'air pour générer le gaz d'inertage ;

la diminution d'une température du gaz d'inertage au moyen du système de régulation thermique aval (332, 432, 532) agencé en aval du module de séparation d'air ; et

l'approvisionnement du réservoir de carburant de l'aéronef en gaz d'inertage à température réduite.

**12.** Procédé selon la revendication 11, dans lequel, lorsque le système de régulation thermique amont (420) comprend l'élément chauffant (436), le procédé comprend en outre l'augmentation d'une température de l'air sous pression après qu'il est passé à travers l'échangeur de chaleur à refroidissement ASM au moyen de l'élément chauffant.

**13.** Procédé selon la revendication 11, dans lequel, lorsque le système de régulation thermique amont (520) comprend le compresseur de suralimentation (538), le procédé comprend en outre l'augmentation d'une température de l'air sous pression après qu'il est passé à travers l'échangeur de chaleur à refroidissement ASM au moyen du compresseur de suralimentation.

FIG.1A

FIG.1B

FIG. 2
Prior Art

# FIG. 3

# FIG. 4

# FIG. 5

# FIG. 6

600

Extract pressurized air from pressurized air source — 602

↓

Cool pressurized air in ASM cooling heat exchanger — 604

↓

Heat pressurized air temperature with upstream thermal conditioning system — 606

↓

Pass reheated pressurized air into air separation module to generate inerting gas — 608

↓

Cool inerting gas with downstream thermal conditioning system — 610

↓

Supply cooled inerting gas to fuel tank — 612

**EP 3 636 552 B1**

**REFERENCES CITED IN THE DESCRIPTION**

**Patent documents cited in the description**

- US 5131225 A
- US 2015360170 A
- US 2004000353 A